# EUROPÄISCHE PATENTSCHRIFT

(11) **EP 1 508 367 B1**
(45) Veröffentlichungstag und Bekanntmachung des Hinweises auf die Patenterteilung: **02.11.2005**
(21) Anmeldenummer: 03019028.4
(22) Anmeldetag: 22.08.2003
(51) Int. Cl.: B01J 19/00, F28F 27/02, F28F 27/00, B01J 3/04, G05D 23/00

(54) **Vorrichtung zur Temperaturregelung des Innenraums von Druckgefässen**
Device for the temperature regulation of the inner space of pressure vessels
Dispositif pour contrôler la température dans une enceinte sous pression

(43) Veröffentlichungstag der Anmeldung: 23.02.2005
(73) Patentinhaber: MASCHINENBAU SCHOLZ GMBH & CO. KG, 48653 Coesfeld (DE)
(72) Erfinder: Martin Graeber, 48653 Coesfeld (DE)
(74) Vertreter: Hauck, Graalfs, Wehnert, Döring, Siemons

(56) Entgegenhaltungen:
- EP-A- 1 162 425
- DE-A- 3 407 176
- US-A- 3 732 266

## Beschreibung

Die vorliegende Erfindung betrifft eine Vorrichtung zur Temperaturregelung des Innenraumes von Druckgefäßen gemäß Oberbegriff von Patentanspruch 1.

Eine derartige Vorrichtung ist aus der DE 34 07 176 C2 bekannt. Bei der bekannten Vorrichtung werden getrennte Kühlmittelströme für die Vorkühlphase und die Kühlphase vorgesehen, wobei diese verschiedenen Ströme aus unterschiedlichen Richtungen in die Kühleinrichtung eingeführt werden. Dies hat zum einen den Vorteil, daß für die Kühlphase und Vorkühlphase unterschiedlich dimensionierte Dosiereinrichtungen eingesetzt werden können, so daß anfangs eine Feinregelung durchgeführt werden kann, der eine Grobregelung folgt. Zum anderen läßt sich hierdurch der Kühlmittelstrom der Vorkühlphase im Unterschied zu der üblichen Einführung des Kühlmittels der Kühlphase von unten von oben in die Kühleinrichtung einführen, wodurch sich die Möglichkeit einer verbesserten Feinregelung ergibt. Das Kühlmittel kann nämlich beispielsweise von oben eingesprüht werden, d.h. es lassen sich hierdurch äußerst geringe Kühlgradienten verwirklichen, während eine Einführung von unten zur Folge haben würde, daß das voll Kühlmittel gepumpte System sehr viel höhere Kühlgradienten mit sich bringen würde, was einer exakten Feinregelung im Wege steht. Durch die Einführung des Kühlmittels während der Vorkühlphase von oben in die Kühleinrichtung wird somit der durch die Anordnung einer speziellen Vorkühlphase erreichte Effekt weiter verbessert.

Die bekannte Vorrichtung hat sich in der Praxis bewährt, da hiermit in bezug auf eine besonders exakte Temperaturregelung während der Plateauphase und der Kühlphase gegenüber dem Stand der Technik eine wesentliche Verbesserung erreicht wird. Bei der bekannten Vorrichtung führt eine erste Kühlmittelzuführleitung von unten in die Kühleinrichtung, wobei von der ersten Kühlmittelzuführleitung eine Kühlmittelabführleitung abgezweigt ist. Die zweite Kühlmittelzuführleitung führt von oben in die Kühleinrichtung, wobei von der zweiten Kühlmittelzuführleitung eine Kühlmittelrückführleitung abgezweigt ist. Die zweite Kühlmittelzuführleitung und die Kühlmittelrückführleitung werden daher von ihrem Verzweigungspunkt bis zur Kühleinrichtung von einer einzigen Leitung gebildet.

Als Kühlmittel findet bei einer derartigen Vorrichtung in der Regel ein solches Verwendung, das bei den hier auftretenden Temperaturen zumindest teilweise verdampft, wie beispielsweise Wasser. Wird das Druckgefäß in der Kühlphase betrieben, wird das Kühlmittel mit der ersten Kühlmittelzuführleitung von unten in die Kühleinrichtung eingeführt, wobei zumindest ein Teil des Kühlmittels verdampft. Der Kühlmitteldampf steigt in der Kühleinrichtung nach oben und gelangt über den gemeinsamen Leitungsabschnitt der Kühlmittelzuführleitung und der Kühlmittelrückführleitung bis zur Verzweigungsstelle und wird von dort über die Kühlmittelrückführleitung abgeführt. In der Regel ist während der Kühlphase das in der zweiten Kühlmittelzuführleitung angeordnete zweite Dosierventil geschlossen, so daß der gebildete Dampf ohne weiteres abgeführt werden kann und diese Abführung nicht durch über die zweite Kühlmittelzuführleitung zugeführtes Kühlwasser behindert wird.

Während der Plateauphase oder Vorkühlphase wird Kühlmittel überwiegend oder ausschließlich über die zweite Kühlmittelzuführleitung der Kühleinrichtung zugeführt. Da hierbei das erste Dosierventil in der ersten Kühlmittelzuführleitung in der Regel geschlossen ist, wird über die erste Kühlmittelzuführleitung kein Kühlmittel zugeführt, so daß keine Verdampfung dieses Kühlmittels auftritt, so daß die Kühlmitteleinführung von oben nicht durch aufsteigenden Dampf behindert wird. Es hat sich jedoch nunmehr gezeigt, daß auch während der Plateau- oder Vorkühlphase eine gewisse Verdampfung des von oben in die Kühleinrichtung eingeführten Kühlmittels in der Kühleinrichtung auftritt, wobei dieser Dampf nach oben steigt und die Einführung des Kühlmittels von oben behindert. Im gemeinsamen Leitungsabschnitt zwischen zweiter Kühlmittelzuführleitung und Kühlmittelrückführleitung wirken daher der aufsteigende Dampf und das zugeführte zweite Kühlmittel einander entgegen. Hierdurch kann es zu Behinderungen der Kühlmitteleinführung kommen, wodurch die Genauigkeit der Temperaturregelung in Mitleidenschaft gezogen wird, insbesondere wenn man berücksichtigt, daß während der Plateauphase oder Vorkühlphase minimale Temperaturgradienten von 0,5 °C/min gefahren werden sollen.

Bei der vorstehend beschriebenen bekannten Lösung hat man sowohl an der Unterseite als auch an der Oberseite der Kühleinrichtung nur eine einzige Leitungseinführung vorgesehen, da man eine derartige Lösung als vorteilhaft angesehen hat. Die vorstehend aufgezeigten Nachteile wurden erst nach langem Einsatz in der Praxis und entsprechenden detaillierten Untersuchungen festgestellt.

Die US-A-3732266 beschreibt ein Verfahren zum Hydrieren von ungesättigtem Öl in einem Behälter, wobei im Behälter.eine Wärmetauscherschlange angeordnet ist. In diese Schlange wird am oberen Ende Dampf eingeführt, während am unteren Ende Wasser eingeführt wird. In Abhängigkeit von der Verschiebung des Gleichgewichtes zwischen Dampf und Wasser erfolgt nunmehr eine Temperatursteuerung des im Behälter befindlichen Öls. Von der Dampfzuführleitung zweigt eine Dampfabführleitung ab, d.h. es ist auch hier wie bei dem vorstehend beschriebenen Stand der Technik eine einzige Leitungseinführung in die Wärmetauscherschlange vorgesehen, so dass im gemeinsamen Leitungsabschnitt der zugeführte Dampf und der abgeführte Dampf entgegenwirken.

Der Erfindung liegt die Aufgabe zugrunde, eine Vorrichtung der eingangs wiedergegebenen Art zu schaffen, die gegenüber dem Stand der Technik eine Verbesserung der Genauigkeit der Temperaturregelung während Plateau- und Kühlphase, insbesondere Vorkühlphase, ermöglicht.

Diese Aufgabe wird erfindungsgemäß bei einer Vorrichtung der eingangs beschriebenen Art dadurch gelöst, daß die Rückführleitung für das Kühlmittel und die zweite Kühlmittelzuführleitung als getrennte Leitungen ausgebildet sind und getrennt voneinander in den oberen Bereich der Kühleinrichtung münden.

Bei der erfindungsgemäßen Lösung werden somit das Kühlmittel während der Plateauphase oder Vorkühlphase über die zweite Kühlmittelzuführleitung und der in der Kühleinrichtung gebildete Kühlmitteldampf über getrennte Leitungen in die Kühleinrichtung eingeführt bzw. von der Kühleinrichtung abgeführt, so daß sich beide Medien nicht behindern und die Temperaturregelung dadurch nicht nachteilig beeinflussen bzw. verfälschen. Da während der Hauptkühlphase das in der zweiten Kühlmittelzuführleitung angeordnete Dosierventil in der Regel geschlossen ist, da während dieser Phase nur Kühlmittel über die erste Kühlmittelzuführleitung zugeführt wird, wird der gebildete Dampf einwandfrei über die Kühlmittelrückführleitung abgeführt und dringt nicht in die zweite Kühlmittelzuführleitung ein. Während der Plateauphase bzw. Vorkühlphase kann der gebildete Dampf ohne weiteres über die Kühlmittelrückführleitung entweichen, da über die zweite Kühlmittelzuführleitung Kühlmittel zugeführt wird. Es kann daher ein einwandfreier Betrieb der Vorrichtung aufrechterhalten werden.

Vorzugsweise sind die Kühlmittelrückführleitung und die zweite Kühlmittelzuführleitung mit großem Abstand voneinander in den oberen Bereich der Kühleinrichtung eingeführt. Hierdurch wird ein Umwälzeffekt des in der Kühleinrichtung befindlichen Dampfes erzielt, da der Dampf aus dem Bereich der Kühleinrichtung, in den das Kühlmittel eingeführt wird, zu dem Bereich umgewälzt wird, von dem die Kühlmittelrückführleitung abzweigt. Hierdurch wird der gewünschte Trenneffekt zwischen Dampf und eingeführtem Kühlmittel noch weiter verbessert, so daß ein Eindringen von Dampf in die zweite Kühlmittelzuführleitung mit noch größerer Sicherheit ausgeschaltet wird.

In Weiterbildung der Erfindung sind die Kühlmittelrückführleitung von oben und die zweite Kühlmittelzuführleitung oben von der Seite in die Kühleinrichtung eingeführt. Bei dieser Ausführungsform kann der gebildete Dampf, der in der Kühleinrichtung nach oben aufsteigt, ohne weiteres in die von der Oberseite der Kühleinrichtung abgehende Kühlmittelrückführleitung gelangen und über diese entweichen. Ein Eindringen des Dampfes in die zweite Kühlmittelzuführleitung wird dadurch verhindert, daß die zweite Kühlmittelzuführleitung von der Seite in den oberen Bereich der Kühleinrichtung mündet, so daß ein Eindringen von Dampf hier eher unwahrscheinlich ist. Der Durchsatz des Kühlmittels in der zweiten Kühlmittelzuführleitung kann daher exakt auf einen vorgegebenen Wert in Abhängigkeit von der zu erbringenden Kühlleistung eingestellt werden, ohne daß dieser Durchsatz durch zurückströmenden Dampf beeinträchtigt wird.

Bei der erfindungsgemäßen Vorrichtung ist die Kühleinrichtung zweckmäßigerweise so ausgebildet, daß sie einen unteren Sammler, einen oberen Sammler und eine Vielzahl von die Sammler verbindenden vertikalen Rohren umfaßt. Die zweite Kühlmittelzuführleitung und die Kühlmittelrückführleitung münden dabei in den oberen Sammler, während die erste Kühlmittelzuführleitung in den unteren Sammler mündet, vorzugsweise etwa mittig. Während die Kühlmittelrückführleitung von der Oberseite des Sammlers abgeht, mündet die zweite Kühlmittelzuführleitung in eine Stirnseite des Sammlers.

vorzugsweise zweigt von der ersten Kühlmittelzuführleitung eine Kühlmittelabführleitung ab, um in der Kühleinrichtung angesammeltes flüssiges Kühlmittel abzuführen.

Auch die zweite Kühlmittelzuführleitung zweigt vorzugsweise von der ersten Kühlmittelzuführleitung ab, wobei das in der zweiten Kühlmittelzuführleitung angeordnete zweite Dosierventil vorzugsweise oberhalb des Druckgefäßes angeordnet ist.

Die Heizeinrichtung und das erste und zweite Dosierventil sind zweckmäßigerweise in einen Temperaturregelkreis geschaltet, wobei dieser Temperturregelkreis mindestens ein im Druckgefäß angeordnetes Thermoelement sowie einen Temperaturregler aufweist, der die Heizeinrichtung, das erste Dosierventil und das zweite Dosierventil ansteuert. Einzelheiten der Temperturregelung werden an dieser Stelle nicht mehr beschrieben und sind im wesentlichen in der eingangs zitierten DE 34 07 176 C2 aufgeführt, wobei hiermit auf die Offenbarung dieser Veröffentlichung Bezug genommen wird.

Durch vollständig getrennte Leitungen für die Rückführung des Kühlmittels (verdampften Kühlmittels) und die Zuführung des Kühlmittels während der Plateauphase und Vorkühlphase gelingt es daher auf erfindungsgemäße Weise, exakt die vorgegebenen und mit den Dosierventilen eingestellten Solldurchsatzwerte zu realisieren, ohne daß diese durch das im Gegenstrom strömende verdampfte Kühlmittel verfälscht werden.

Bei einer weiteren Ausführungsform der Erfindung ist das zweite Dosierventil unterhalb des Autoklaven innerhalb einer Ventilstation angeordnet. Auf diese Weise lassen sich sämtliche Ventile lagemäßig zusammenfassen.

Bei einer anderen Ausführungsform weist die zweite Kühlmittelzuführleitung in der Nähe des Autoklaven eine Überhöhung auf. Hierdurch kann das Kühlwasser in der Kühlmittelzuführleitung bis in Autoklavennähe gehalten werden. Die Überhöhung der Zuführleitung befindet sich vorzugsweise am Stutzen des Autoklaven.

Bei noch einer anderen Ausführungsform sind die Kühlmittelrückführleitung von oben und die zweite Kühlmittelzuführleitung von vorne oder hinten in den oberen Sammler eingeführt. Die zweite Kühlmittelzuführleitung kann aber auch wie die Kühlmittelrückführleitung von oben in den oberen Sammler eingeführt werden, wobei die Kühlmittelzuführleitung vorzugsweise innerhalb des Sammlers ein um 90° zum übrigen Teil der Kühlmittelzuführleitung abgewinkeltes Endstück aufweist, so daß das Kühlmittel in Horizontalrichtung in den Sammler eingeführt wird. Auch bei dem vorstehend erwähnten Fall, bei dem die zweite Kühlmittelzuführleitung von vorne oder von hinten in den oberen Sammler eingeführt ist, erfolgt die Kühlmittelzuführung in den oberen Sammler vorzugsweise horizontal.

Die Erfindung wird nachfolgend anhand eines Ausführungsbeispieles in Verbindung mit der Zeichnung im einzelnen erläutert. Es zeigen:
- Figur 1: eine schematische Darstellung einer Vorrichtung zur Temperaturregelung des Innenraumes von Druckgefäßen;
- Figur 2: einen vergrößerten Teillängsschnitt durch das Druckgefäß;
- Figur 3: einen Querschnitt durch das Druckgefäß mit Darstellung der Kühleinrichtung;
- Figur 4: einen Querschnitt durch den unteren Sammler der Kühleinrichtung;
- Figur 5: einen Teillängsschnitt durch den unteren Sammler der Kühleinrichtung;
- Figur 6: einen Teilhorizontalschnitt durch die Kühleinrichtung am oberen Ende des unteren Sammlers;
- Figur 7: eine vergrößerte Darstellung der Einmündung der zweiten Kühlmittelzuführleitung in den oberen Sammler;
- Figur 8: eine Einzeldarstellung der zweiten Kühlmittelzuführleitung;
- Figur 9: eine schematische Darstellung einer weiteren Ausführungsform einer Vorrichtung zur Temperaturregelung des Innenraumes von Druckgefäßen;
- Figur 10: einen Längsschnitt durch eine weitere Ausführungsform des oberen Sammlers der Kühleinrichtung;
- Figur 11: einen Längsschnitt durch noch eine weitere Ausführungsform des oberen Sammlers der Kühleinrichtung; und
- Figur 12: einen Schnitt entlang Linie A-B in Figur 11.

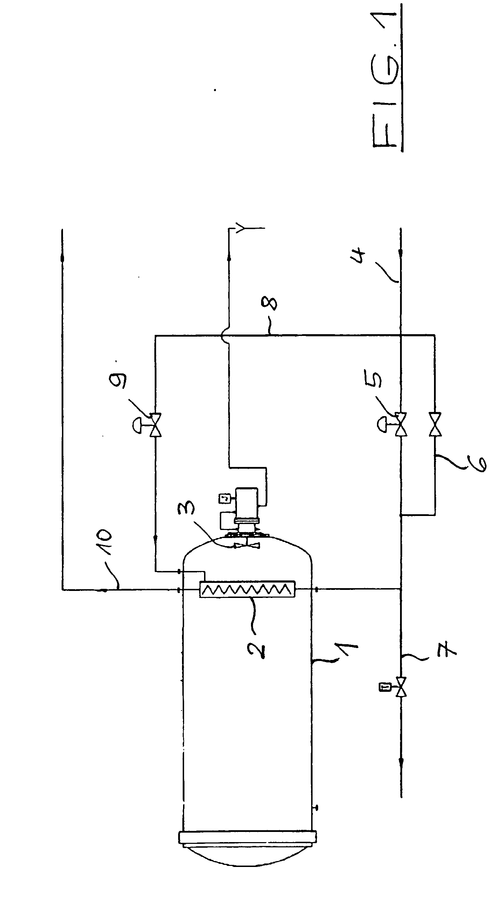

In Figur 1 sind das Druckgefäß 1 und die Vorrichtung zur Temperaturregelung des Innenraumes desselben nur schematisch dargestellt. Weitere Einzelheiten, die für die Erfindung nicht unbedingt erforderlich sind, sind nicht dargestellt. So sind beispielsweise die Heizeinrichtung des Druckgefäßes und alle anderen Steuer- und Regeleinrichtungen nicht dargestellt.

Figur 1 zeigt ein liegendes Druckgefäß 1, das als Autoklav ausgebildet ist und zur Druckbehandlung von irgendwelchen Produkten dient. Im Druckgefäß sind eine Kühleinrichtung 2, Heizeinrichtungen (Infrarotstrahler, nicht dargestellt) und ein Ventilator 3 angeordnet. Der genaue Aufbau dieses Druckgefäßes ist in der vorstehend erwähnten DE 34 07 176 C2 beschrieben, auf die hiermit Bezug genommen wird.

Die im Druckgefäß befindlichen Produkte werden einer speziellen Behandlung unterzogen, wobei die Temperatur im Innenraum des Druckgefäßes in gesteuerter Weise erhöht (Aufheizphase), auf einem etwa konstanten Wert gehalten (Plateauphase) und anschließend abgesenkt wird (Vorkühlphase und Kühlphase). Der Druckgefäßinnenraum kann dabei auch während der Plateauphase beheizt werden.

Die Vorrichtung umfaßt zum Kühlen eine erste Kühlmittelzuführleitung 4, in der ein erstes Dosierventil 5 angeordnet ist und die an eine geeignete Kühlmittelquelle angeschlossen ist. Die erste Kühlmittelzuführleitung mündet von unten in die Kühleinrichtung 2. Von der ersten Kühlmittelzuführleitung 4 zweigt eine Kühlmittelabführleitung 7 ab.

Zum Vorkühlen während der Plateauphase und/oder der Vorkühlphase dient eine zweite Kühlmittelzuführleitung 8, die von der ersten Kühlmittelzuführleitung 4 abzweigt und in der ein zweites Dosierventil 9 angeordnet ist. Die zweite Kühlmittelzuführleitung mündet seitlich in den oberen Bereich der Kühleinrichtung 2. Von der Oberseite der Kühleinrichtung 2 erstreckt sich eine Kühlmittelabführleitung 10. Eine Bypassleitung 6 umgeht das erste Dosierventil 5.

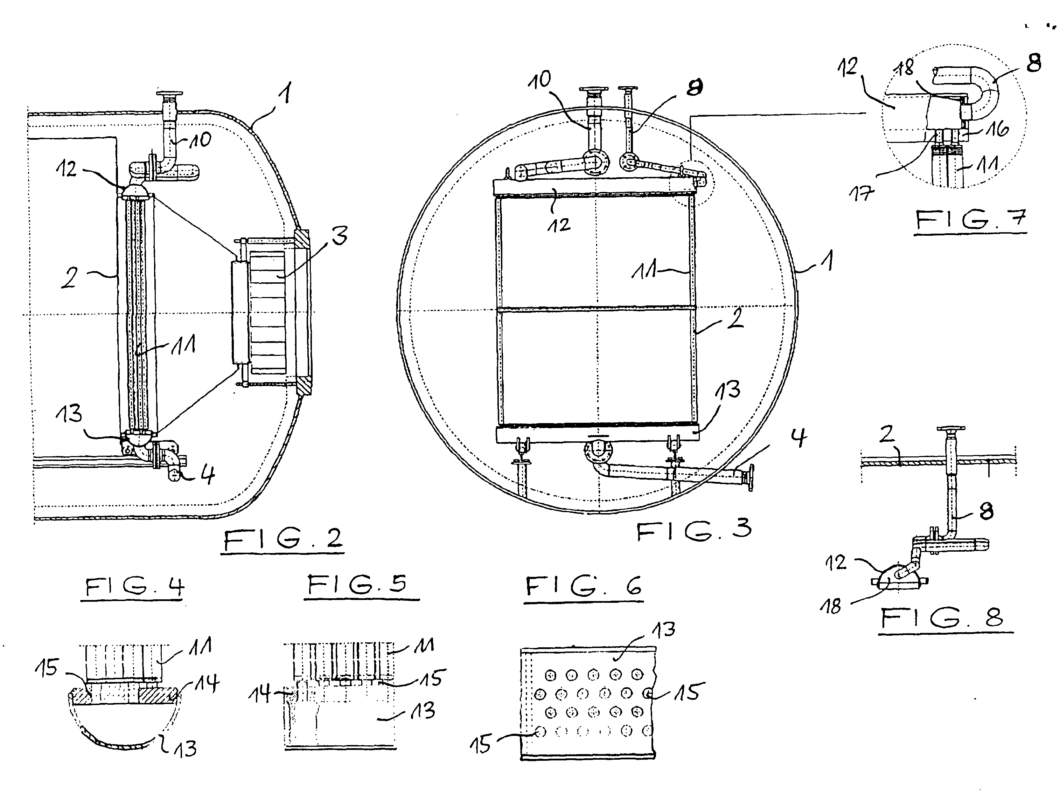

Der genaue Aufbau der Kühleinrichtung 2 mit den entsprechenden Anschlüssen ist in den folgenden Figuren 2 bis 8 dargestellt. Wie Figur 2 zeigt, besitzt die Kühleinrichtung 2 einen oberen Sammler 12 und einen unteren Sammler 13, die über eine Vielzahl von vertikal angeordneten Rohren 11 miteinander in Verbindung stehen. Die erste Kühlmittelzuführleitung 4 mündet etwa mittig in den unteren Sammler 13, während, wie in Figur 3 gezeigt, die zweite Kühlmittelzuführleitung 8 seitlich in den oberen Sammler 12 und die Kühlmittelrückführleitung 10 von oben in den oberen Sammler 12 münden.

Figur 4 zeigt einen Querschnitt durch den unteren Sammler 13. Der Sammler 13 ist im Schnitt etwa halbkreisförmig ausgebildet und besitzt eine Abschlußwand 14, in der entsprechende Bohrungen 15 ausgebildet sind, die in die Vielzahl der vertikalen Rohre 11 münden. Die Figuren 4 und 6 zeigen, daß vier parallele Rohrreihen vorgesehen sind, wobei die Rohre der einzelnen Reihen versetzt zueinander angeordnet sind. Diese vertikalen Rohre 11 münden in den oberen Sammler 12, wobei der Rohranschluß 11 an den oberen Sammler in Figur 7 dargestellt ist. Auch hier erstrecken sich geeignete Bohrungen 17 durch die untere Abschlußwand 16 des Sammlers bis zu den Rohren 11. Figur 7 zeigt ferner den Anschluß der zweiten Kühlmittelzuführleitung 8 an den oberen Sammler 12, wobei sich die Leitung 8 durch die in Figur 3 rechte Stirnwand 18 des oberen Sammlers 12 erstreckt. Das Kühlmittel wird somit horizontal in den oberen Sammler 12 eingeführt und dringt durch die Bohrungen 17 in die Rohre 11, wobei eine Strömungsumlenkung um 90° erfolgt. Die Kühlmittelrückführleitung 10 mündet von oben in den oberen Sammler 12, und zwar mit einem großen Abstand von der Leitung 8 im anderen Endbereich des Sammlers.

Wenn in der Plateauphase und/oder Vorkühlphase Kühlmittel über die zweite Kühlmittelzuführleitung 8 in die Kühleinrichtung 2 eingeführt wird, gelangt das Kühlmittel aus seitlicher Richtung in den oberen Sammler 12, durchströmt diesen in Horizontalrichtung und strömt dann nach unten durch die vertikalen Rohre 11 bis zum unteren Sammler 13. Der noch in der Kühleinrichtung vorhandene Dampf und/oder der während der Plateauphase oder Vorkühlphase gebildete Dampf steigt in den vertikalen Rohren 11 nach oben in den oberen Sammler 12. Da das Kühlmittel überwiegend im rechten Bereich der Figur 3 die Rohre 11 nach unten durchströmt, wird der Dampf in den in Figur 3 linken Bereich der Kühleinrichtung geführt bzw. umgewälzt, so daß dieser ohne weiteres den oberen Sammler 12 nach oben durch die Kühlmittelrückführleitung 10 verlassen kann, ohne den Zufluß des Kühlmittels über die Leitung 8 zu behindern. Überflüssiges Kühlmittel in flüssiger Form wird von der Kühleinrichtung über die erste Kühlmittelzuführleitung 4 und dann die hiervon abzweigende Kühlmittelabführleitung 7 abgeführt.

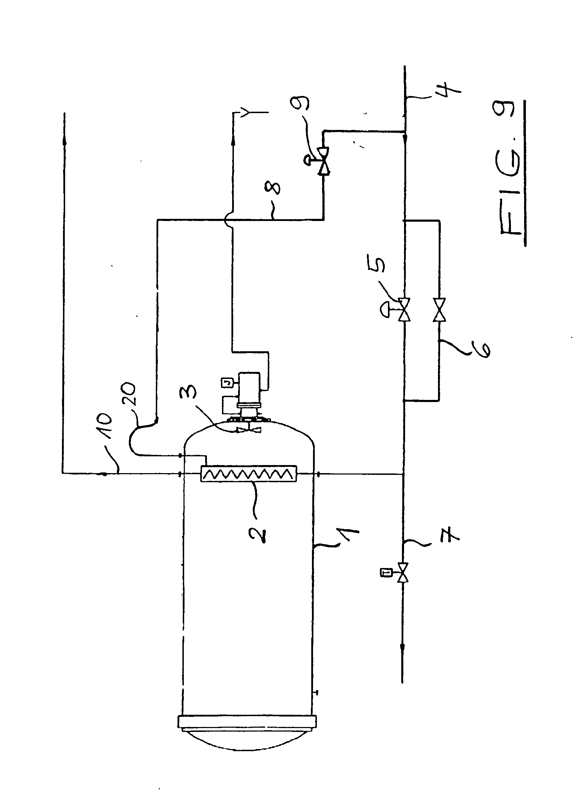

Figur 9 zeigt eine schematische Darstellung einer weiteren Ausführungsform einer Vorrichtung zur Temperaturregelung des Innenraumes von Druckgefäßen, wobei hier nur auf Änderungen gegenüber der Ausführungsform der Figur 1 eingegangen wird. Gegenüber der Ausführungsform von Figur 1 sind im wesentlichen zwei Änderungen vorhanden. Zum einen ist das zweite Dosierventil 9 in der zweiten Kühlmittelzuführleitung nicht mehr oberhalb des Autoklaven, sondern innerhalb einer Ventilstation unterhalb des Autoklaven angeordnet. Zum anderen ist in der zweiten Kühlmittelzuführleitung 8 eine Überhöhung 20 in der Nähe des Autoklaven 1 vorgesehen, um das Kühlwasser in der Kühlmittelzuführleitung 8 bis in Autoklavennähe zu halten.

Figur 10 zeigt einen Längsschnitt durch eine weitere Ausführungsform des oberen Sammlers 12 der Kühleinrichtung. Bei dieser Ausführungsform verläßt die Kühlmittelrückführleitung 10 den Sammler 12 nach oben im linken Endbereich des Sammlers, während die zweite Kühlmittelzuführleitung 8 von oben in den Sammler 12 eingeführt ist und ein um 90° hierzu abgewinkeltes Endstück 21 aufweist, so daß das Kühlmittel in Horizontalrichtung in den oberen Sammler 12 eingeführt wird.

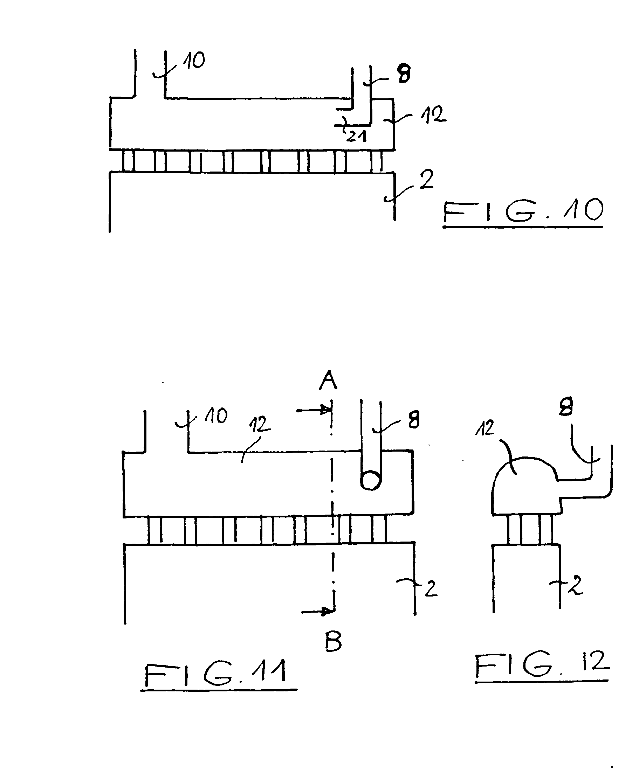

Bei der in den Figuren 11 und 12 gezeigten Ausführungsform mündet die zweite Kühlmittelzuführleitung 8 in der Zeichnung von hinten in den oberen Sammler 12, so daß auch hier der Kühlmitteleintritt in Horizontalrichtung erfolgt, allerdings senkrecht zur Längsachse des Sammlers.

## Patentansprüche

1. Vorrichtung zur Temperaturregelung des Innenraumes von Druckgefäßen (1) mit
einer im Druckgefäß (1) angeordneten Heizeinrichtung und Kühleinrichtung (2), die von einem Kühlmittel durchströmt wird,
einer Quelle für das Kühlmittel, die über eine erste Kühlmittelzuführleitung (4) mit der Kühleinrichtung (2) in Verbindung steht,
einer Rückführleitung (10) für das Kühlmittel, einem in der ersten Kühlmittelzuführleitung (4) angeordneten ersten Dosierventil (5) und
einer zweiten Kühlmittelzuführleitung (8) für die Kühleinrichtung (2), die an die Kühlmittelquelle angeschlossen und in der ein zweites Dosierventil (9) angeordnet ist, dessen maximaler Durchflußquerschnitt wesentlich geringer ist als der des ersten Dosierventiles (5),
wobei die erste Kühlmittelzuführleitung (4) von unten und die zweite Kühlmittelzuführleitung (8) in den oberen Bereich der Kühleinrichtung (2) münden,
**dadurch gekennzeichnet, daß** die Rückführleitung (10) für das Kühlmittel und die zweite Kühlmittelzuführleitung (8) als getrennte Leitungen ausgebildet sind und getrennt voneinander in den oberen Bereich der Kühleinrichtung (2) münden.

2. Vorrichtung nach Anspruch 1, **dadurch gekennzeichnet, daß** die Kühlmittelrückführleitung (10) und die zweite Kühlmittelzuführleitung (8) mit großem Abstand voneinander in den oberen Bereich der Kühleinrichtung (2) eingeführt sind.

3. Vorrichtung nach Anspruch 1 oder 2, **dadurch gekennzeichnet, daß** die Kühlmittelrückführleitung (10) von oben und die zweite Kühlmittelzuführleitung (8) oben von der Seite in die Kühleinrichtung (2) eingeführt sind.

4. Vorrichtung nach einem der vorangehenden Ansprüche, **dadurch gekennzeichnet, daß** die Kühleinrichtung (2) einen unteren Sammler (13), einen oberen Sammler (12) und eine Vielzahl von die Sammler (12, 13) verbindenden vertikalen Rohren (11) umfaßt.

5. Vorrichtung nach Anspruch 4, **dadurch gekennzeichnet, daß** die erste Kühlmittelzuführleitung (4) etwa mittig von unten in den unteren Sammler (13) eingeführt ist.

6. Vorrichtung nach Anspruch 4 oder 5, **dadurch gekennzeichnet, daß** die Kühlmittelrückführleitung (10) von oben und die zweite Kühlmittelzuführleitung (8) von der Seite in den oberen Sammler (12) eingeführt sind.

7. Vorrichtung nach einem der vorangehenden Ansprüche, **dadurch gekennzeichnet, daß** die zweite Kühlmittelzuführleitung (8) von der ersten Kühlmittelzuführleitung (4) abzweigt und daß das zweite Dosierventil (9) oberhalb des Druckgefäßes (1) angeordnet ist.

8. Vorrichtung nach einem der vorangehenden Ansprüche, **dadurch gekennzeichnet, daß** die Heizeinrichtung und das erste und zweite Dosierventil (5, 9) in einen Temperaturregelkreis geschaltet sind und daß der Temperaturregelkreis mindestens ein im Druckgefäß (1) angeordnetes Thermoelement sowie einen Temperaturregler aufweist, der die Heizeinrichtung, das erste Dosierventil (5) und das zweite Dosierventil (9) ansteuert.

9. Vorrichtung nach einem der Ansprüche 1 bis 6 oder 8, **dadurch gekennzeichnet, daß** das zweite Dosierventil (9) unterhalb des Autoklaven (1) innerhalb einer Ventilstation angeordnet ist.

10. Vorrichtung nach einem der vorangehenden Ansprüche, **dadurch gekennzeichnet, daß** die zweite Kühlmittelzuführleitung (8) in der Nähe des Autoklaven (1) eine Überhöhung aufweist.

11. Vorrichtung nach einem der Ansprüche 1 bis 5 oder 7 bis 10, **dadurch gekennzeichnet, daß** die Kühlmittelrückführleitung (10) von oben und die zweite Kühlmittelzuführleitung (8) von vorne oder hinten in den oberen Sammler (12) eingeführt sind.

## Claims

1. A device for the temperature regulation of the inner space of pressure vessels (1), comprising
heating means disposed in the pressure vessel (1) and cooling means (2) flown through by a cooling agent,
a source for the cooling agent connected to the cooling means (2) through a first cooling agent supply line (4),
a return line (10) for the cooling agent, a first metering valve (5) disposed in the first cooling agent supply line (4) and
a second cooling agent supply line (8) for the cooling means (2) connected to the cooling agent source and having disposed therein a second metering valve (9) the maximum flow section of which is substantially smaller than that of the first metering valve (5),
wherein the first cooling agent supply line (4) opens from below and the second cooling agent supply line (8) opens into the upper region of the cooling means (2),
**characterized in that** the return line (10) for the cooling agent and the second cooling agent supply line (8) are formed as separated lines and open separated from one another into the upper region of the cooling means (2).

2. The device according to claim 1, **characterized in that** the cooling agent return line (10) and the second cooling agent supply line (8) are introduced into the upper region of the cooling means (2) with a large distance from one another.

3. The device according to claim 1 or 2, **characterized in that** the cooling agent return line (10) is introduced from above and the second cooling agent supply line (8) is introduced above from the side into the cooling means (2).

4. The device according to one of the preceding claims, **characterized in that** the cooling means (2) comprises a lower collector (13), an upper collector (12) and a plurality of vertical tubes (11) connecting the collectors (12, 13).

5. The device according to claim 4, **characterized in that** the first cooling agent supply line (4) is introduced into the lower collector (13) approximately centrally from below.

6. The device according to claim 4 or 5, **characterized in that** the cooling agent return line (10) is introduced from above and the second cooling agent supply line (8) is introduced from the side into' the upper collector (12).

7. The device according to one of the preceding claims, **characterized in that** the second cooling agent supply line (8) is branched off from the first cooling agent supply line (4) and that the second metering valve (9) is disposed above the pressure vessel (1).

8. The device according to one of the preceding claims, **characterized in that** the heating means and the first and second metering valve (5, 9) are disposed in a temperature control circuit and that the temperature control circuit includes at least one thermoelement disposed in the pressure vessel (1) and a temperature controller controlling the heating means, the first metering valve (5) and the second metering valve (9).

9. The device according to one of the claims 1 to 6 or 8, **characterized in that** the second metering valve (9) is disposed below the autoclave (1) within a valve station.

10. The device according to one of the preceding claims, **characterized in that** the second cooling agent supply line (8) has a raised portion in the vicinity of the autoclave (1).

11. The device according to one of the claims 1 to 5 or 7 to 10, **characterized in that** the cooling agent return line (10) is introduced from above and the second cooling agent supply line (8) is introduced from the front or the rear into the upper collector (12).

## Revendications

1. Dispositif pour contrôler la température du volume intérieur d'enceintes sous pression avec
un élément chauffant (1) disposé dans l'enceinte sous pression ainsi qu'un élément réfrigérant (2) qui est traversé par un fluide réfrigérant,
une source pour le fluide réfrigérant qui est en communication avec l'élément réfrigérant (2) par l'intermédiaire d'une première conduite d'amenée (4) du fluide réfrigérant,
une conduite de retour (10) pour le fluide réfrigérant, une première vanne de dosage (5) disposée dans la première conduite d'amenée (4) du fluide réfrigérant et
une deuxième conduite d'amenée (8) du fluide réfrigérant pour l'élément réfrigérant (2) qui est raccordée à la source de fluide réfrigérant et dans laquelle est disposée une deuxième vanne de dosage (9) dont la section de passage est nettement plus petite que celle de la première vanne de dosage (5),
dans lequel la première conduite d'amenée (4) du fluide réfrigérant débouche par le bas et la deuxième conduite d'amenée (8) du fluide réfrigérant débouche dans la région supérieure de l'élément réfrigérant (2),
**caractérisé en ce que** la conduite de retour (10) pour le fluide réfrigérant et la deuxième conduite d'amenée (8) du fluide réfrigérant sont conçues comme des conduites séparées et débouchent séparément l'une de l'autre dans la région supérieure de l'élément réfrigérant (2).

2. Dispositif selon la revendication 1, **caractérisé en ce que** la conduite de retour (10) pour le fluide réfrigérant et la deuxième conduite d'amenée (8) du fluide réfrigérant sont introduites à grande distance l'une de l'autre dans la région supérieure de l'élément réfrigérant (2).

3. Dispositif selon la revendication 1 ou 2, **caractérisé en ce que** la conduite de retour (10) pour le fluide réfrigérant est introduite par le dessus et la deuxième conduite d'amenée (8) du fluide refrigérant est introduite au-dessus par le côté dans l'élément réfrigérant (2).

4. Dispositif selon une ces revendications précédentes, **caractérisé en ce que** l'élément réfrigérant (2) comprend un collecteur inférieur (13), un collecteur supérieur (12) et une pluralité de tubes verticaux (11) reliant les collecteurs (12, 13).

5. Dispositif selon la revendication 4, **caractérisé en ce que** la première conduite d'amenée (4) du fluide réfrigérant est introduite de manière à peu près centrée par le bas dans le collecteur inférieur (13).

6. Dispositif selon la revendication 4 ou 5, **caractérisé en ce que** la conduite de retour (10) pour le fluide réfrigérant est introduite par le haut et la deuxième conduite d'amenée (8) du fluide réfrigérant est introduite par le côté dans le collecteur supérieur (12).

7. Dispositif selon une ces revendications précédentes, **caractérisé en ce que** la deuxième conduite d'amenée (8) du fluide réfrigérant se sépare de la première conduite d'amenée (4) du fluide réfrigérant et **en ce que** la deuxième vanne de dosage (9) est disposée au-dessus de l'enceinte sous pression (1).

8. Dispositif selon une ces revendications précédentes, **caractérisé en ce que** l'élément chauffant et les première et deuxième vannes de dosage (5, 9) sont montés dans un circuit de régulation de la température et **en ce que** le circuit de régulation de la température présente au moins un thermocouple disposé dans l'enceinte sous pression (1) ainsi qu'un régulateur de température qui commande l'élément chauffant, la première vanne de dosage (5) et la deuxième vanne de dosage (9).

9. Dispositif selon une des revendications 1 à 6 ou 8, **caractérisé en ce que** la deuxième vanne de dosage (9) est disposée en dessous de l'autoclave (1) à l'intérieur d'un poste de vanne.

10. Dispositif selon une ces revendications précédentes, **caractérisé en ce que** la deuxième conduite d'amenée (8) du fluide réfrigérant présente une surélévation à proximité de l'autoclave (1).

11. Dispositif selon une des revendications 1 à 5 ou 7 à 10, **caractérisé en ce que** la conduite de retour (10) pour le fluide réfrigérant est introduite par le dessus et la deuxième conduite d'amenée (8) du fluide réfrigérant est introduite par l'avant ou l'arrière dans le collecteur supérieur (12).
